# EUROPÄISCHE PATENTSCHRIFT

(11) **EP 0 225 612 B1**
(45) Veröffentlichungstag und Bekanntmachung des Hinweises auf die Patenterteilung: **17.02.1993**
(21) Anmeldenummer: 86116887.0
(22) Anmeldetag: 04.12.1986
(51) Int. Cl.: C08F 265/04, C08F 8/44, C08F 6/10, C09J 113/00, C09D 133/00

(54) **Wässrige Polymerdispersionen, ein Verfahren zu deren Herstellung und deren Verwendung**
Aqueous polymer dispersions, process for their preparation and their use
Dispersions aqueuses, leur procédé de préparation et leur utilisation

(30) Priorität: 07.12.1985 DE 3543361
(43) Veröffentlichungstag der Anmeldung: 16.06.1987
(73) Patentinhaber: BASF Aktiengesellschaft, 67063 Ludwigshafen (DE)
(72) Erfinder: Auchter, Gerhard, Dr., D-6800 Mannheim 31 (DE); Neubert, Gerhard, Dr., D-6719 Battenberg (DE); Osterloh, Rolf, Dr., D-6718 Gruenstadt (DE)

(56) Entgegenhaltungen:
- FR-A- 1 566 442
- FR-A- 2 301 578
- GB-A- 1 555 868
- US-A- 4 151 143
- CHEMICAL ABSTRACTS, Band 93, 1980, Seite 91, Nr. 206244m, Columbus, Ohio, US
- CHEMICAL ABSTRACTS, Band 83, 1975, Seite 118, Nr. 133527n, Columbus, Ohio, US

## Beschreibung

Die Erfindung betrifft physikalisch trocknende besonders wasserquellfest verfilmende wäßrige Polymerdispersionen, ein Verfahren zu deren Herstellung und die Anwendung dieser Dispersionen als Bindemittel für die Beschichtung oder Imprägnierung starrer oder flexibler und gegebenenfalls poröser Untergründe. Die erfindungsgemäßen Dispersionen enthalten weniger als 5 Gew.%, vorzugsweise weniger als 2 Gew.% organische Lösemittel und sind frei von hydrophilen Hilfsstoffen.

Wäßrige Polymerdispersionen als Bindemittel für die verschiedensten Anwendungsgebiete auf dem Beschichtungssektor zählen seit langem zum Stand der Technik. Sie werden in der Regel unter Zuhilfenahme von hydrophilen Hilfsstoffen zur Sicherung der Dispersionsstabilität im allgemeinen in wäßriger Phase mit Hilfe von Initiatoren aus miteinander copolymerisierbaren Monomeren hergestellt. Als solche hydrophilen Stabilisatoren dienen im allgemeinen die verschiedenartigsten Emulgatoren und/oder Schutzkolloide. Der Gehalt an solchen Hilfsstoffen führt jedoch zu dem schwerwiegenden Nachteil, daß die getrockneten Beschichtungen über lange Zeit ihren hydrophilen Charakter beibehalten und daher bei Nässebeanspruchung ihre guten Filmeigenschaften weitgehend verlieren. Für die Anwendung herkömmlicher physikalisch trocknender Dispersionen z.B. auf den Gebieten der Straßenmarkierung oder des Korrosionsschutzes im Industrieanlagenbau oder im Schiffsbau, wo besonders hohe Anforderungen an die Hydrophobie und Wasserfestigkeit der getrockneten Filme gestellt werden, konnten daher bisher keine zufriedenstellenden Problemlösungen gefunden werden.

Es wurden immer wieder Versuche unternommen, Polymerdispersionen nach dem Verfahren der Emulsionspolymerisation ohne Zuhilfenahme hydrophiler Stabilisatoren herzustellen. Solche Dispersionen sind z.B. in der DE-OS 33 13 922, der DE-OS 31 23 598 oder der US-PS 4 151 143 beschrieben.

Derartige Dispersionen haben wegen ihrer begrenzten Stabilität jedoch nur geringe praktische Bedeutung. Zur Herstellung pigmentierter oder gefüllter Beschichtungsstoffe benötigen sie beispielsweise - ebenso wie die hilfsstoffhaltigen Dispersionen - Pigmentnetzmittel oder Pigmentverteiler zum Anteigen der Pigmente und Füllstoffe. Dies erfordert einen zusätzlichen Arbeitsgang und die hierfür erforderlichen Hilfsstoffe beeinträchtigen die Wasserquellbeständigkeit der Beschichtungen noch zusätzlich.

Außerdem weisen solche Dispersionen immer noch typische Nachteile der Emulsionspolymerisate auf, z.B. ungenügende Naßhaftung auf den verschiedensten Untergründen.

Die Herstellung von Sekundärdispersionen, bei denen auf die Verwendung hydrophiler Emulgatoren und/oder Schutzkolloide verzichtet werden kann, ist z.B. in JA-PS 52 072-797, JA-PS 51 145-529, BE-PS 780 387, JA-PS 55 040-809, in K. Weigel, Wasserlösliche Lacke, Fachberichte für Oberflächentechnik 7 (1969), Nr. 9-10, Seite 182-184, in DE-OS 30 22 870, DE-OS 30 22 824, DE-OS 32 12 238, JA-OS 55 082-166 und in FR-PS 1 384 246 beschrieben.

Aber auch diese Dispersionen lassen noch beträchtliche Wünsche für deren Anwendung als Bindemittel für Beschichtungs- und Imprägnierstoffe offen. Als Alleinbindemittel sind sie ungenügend stabil für die Dispergierung von Pigmenten; es müssen zusätzliche Dispergierstoffe zugesetzt werden. Außerdem sind sie mit Primärdispersionen nicht genügend verträglich. Es kommt zu Ausflockungen des Bindemittels in Gegenwart von Pigmenten, und ihr Polymergehalt ist verhältnismäßig gering. Sie zeigen ferner eine starke Viskositätsabhängigkeit vom pH-Wert und ein ungenügendes Fließverhalten. Außerdem ist die Verträglichkeit mit stark polaren Lösungsmitteln wie Ethylglykol, Methylglykol oder Propylenglykol nicht voll befriedigend.

In der EP-A 0133 949 werden wasserverdünnbare Beschichtungsmittel beschrieben, die aus einer mit Wasser emulgierbaren Kombination aus einer Lösung eines physikalisch trocknenden Polymeren in organischen Lösungsmitteln, einem durch Salzbildung wasserlöslichen Polymeren und gegebenenfalls einem Weichmachungsmittel bestehen. Diese Kombinationen weisen die Vorteile guter Naßhaftung, schneller Trocknung und geringer Alkaliempfindlichkeit auf; jedoch benötigen auch sie Pigmentnetzmittel und/oder Pigmentverteiler zum Anteigen der Pigmente und Füllstoffe. Außerdem enthalten sie beträchtliche Anteile organischer Lösungsmittel, was im Hinblick auf den Umweltschutz nicht erwünscht ist.

Ein Ziel der vorliegenden Erfindung war es daher, Dispersionen mit hohem Qualitätsniveau aufzufinden, die sich weitestgehend frei von organischen Lösemitteln herstellen lassen und die sich durch eine für die Praxis ausreichende Stabilität auszeichnen, insbesondere auch gegenüber Anforderungen, die beim Pigmentieren und Füllen der Dispersionen auftreten z.B. bei der Herstellung von Farben, und die darüber hinaus auch eine besonders schnelle Trocknung zeigen.

Diese Aufgabe wird überraschenderweise durch ein Verfahren gelöst, bei dem zwei Bindemittelkomponenten unter Einhaltung spezieller Parameter miteinander kombiniert werden.

Gegenstand der vorliegenden Erfindung sind wäßrige Polymerisatdispersionen, deren Polymerisatanteil im wesentlichen aus den Komponenten
A) 15 bis 50 Gew.% eines Copolymerisates A aus
   I 25 bis 98,5 Gew.% eines Acrylsäure- oder Methacrylsäure-C₁-C₂₀-alkylesters oder Gemisches dieser Ester
   II 0 bis 60 Gew.% des Monomeren I oder eines Vinylaromaten
   III 1,5 bis 15 Gew.% einer copolymerisierbaren olefinisch ungesättigten Carbonsäure oder einem ihrer Anhydride, die bis zu 10 C-Atomen enthalten und
   IV bis zu 30 Gew.% sonstiger copolymerisierbarer Verbindungen
   und
B) 50 bis 85 Gew.% eines Lösungspolymerisates B aus ausschließlich den Comonomeren I, II und IV besteht,
erhältlich durch Lösungspolymerisation einer dieser Komponenten (A) oder (B) in einem organischen Lösungsmittel und anschließender Lösungspolymerisation der anderen Komponente in der so erhaltenen Polymerisationslösung, Dispergierung der (A) und (B) enthaltenden Lösung unter Zusatz von Ammoniak in Wasser und destillative Entfernung des organischen Lösungsmittels auf eine Konzentration von weniger als 5 Gew.%, bezogen auf die Menge der Dispersion, sowie ein Verfahren zu deren Herstellung.

In US-PS 4 151 143 sind wäßrige Polymerdispersionen beschrieben, die dadurch hergestellt werden, daß man erst die Monomeren I, II, III und IV in Lösung polymerisiert, die erhaltene Polymerlösung in Wasser dispergiert und in dieser wäßrigen Dispersion dann die Monomeren I, III und IV polymerisiert. Dabei entsteht in der 2. Stufe ein Emulsionspolymerisat, welches den Überzugsmitteln grundsätzlich andersartige Eigenschaften, insbesondere ein nachteiliges Verfilmungsverhalten, verleiht. In der JP-OS 80/82166 ist ein Verfahren zur Herstellung von Sekundärdispersionen durch zweistufige Lösungspolymerisation beschrieben, bei der in beiden Stufen die Monomeren I, II, III und IV polymerisiert werden. Bei den erhaltenen Polymeren tragen folglich beide Komponenten Carboxylgruppen, was zu einer stark verminderter Wasserfestigkeit bei daraus hergestellten Überzügen führt. Es war daher nicht zu erwarten, daß diese genannten Nachteile nicht auftreten, wenn man eine zweistufige Lösungspolymerisation nach JP-OS 80/82 166 mit den Monomeren nach US-PS 4 151 143 durchführt.

Vorzugsweise beträgt bei Mitverwendung von weniger als 10 Gew.% Vinylaromaten die Säurezahl der Komponente (A) maximal 75 mg KOH/g Feststoff und die Säurezahl der Mischung der Komponenten (A) und (B) maximal 30 mg KOH/g Feststoff und bei Mitverwendung von 10 bis 60 Gew.% Vinylaromaten beträgt die Säurezahl der Komponente (A) maximal 95 mg KOH/g Feststoff und die Säurezahl der Mischung der Komponenten (A) und (B) maximal 50 mg KOH/g Feststoff.

Gegenstand der vorliegenden Erfindung ist außerdem die Verwendung von Polymerdispersionen, die nach dem erfindungsgemäßen Verfahren hergestellt wurden, als Bindemittel für Beschichtungen auf starren oder flexiblen Untergründen sowie als Klebstoff.

Die technischen Vorteile der erfindungsgemäß hergestellten neuen Dispersionen bestehen - im Vergleich zu den bekannten Produkten - darin, daß sie sich sowohl lösemittelfrei als auch vollkommen frei von hydrophilen Hilfsstoffen, wie z.B. Emulgatoren, Schutzkolloiden, Netzmitteln, Pigmentverteilern und wäßrigen Verdickungsmitteln herstellen und weiterverarbeiten lassen. Beschichtungs-, Imprägnier- und Klebstoffe auf ihrer Basis ergeben Filme, die sich durch außergewöhnliche gute Wasserquellbeständigkeit und Hydrophobie, insbesondere schon direkt nach der Verfilmung der Dispersion bzw. der Farben auf ihrer Basis auszeichnen. Die Dispersionen vermögen Pigmente und Füllstoffe bei pH-Werten von über ca. 8,5 gut zu benetzen. Sie sind ausreichend scherstabil, um mit ihrer Hilfe Pigmente und Füllstoffe anreiben zu können. Die sonst erforderlichen hydrophilen Pigmentverteiler erübrigen sich daher.

Durch Nachneutralisation mit Basen wie z.B. Ammoniak lassen sich die erfindungsgemäß hergestellten Dispersionen strukturviskos oder plastisch fließend einstellen. Dadurch kann auf die Mitverwendung hydrophiler Verdickungsmittel verzichtet werden. Ein weiterer Vorteil dieser Dispersionen im Vergleich zu herkömmlichen besteht darin, daß sich die angetrockneten Dispersionen leicht mit organischen Lösemitteln wieder entfernen lassen, beispielsweise zur Reinigung der Verarbeitungsgeräte.

Vorteilhaft ist weiterhin die gute Verträglichkeit mit organischen, mit Wasser nicht mischbaren und wassermischbaren Produkten, wie z.B. mit Weichmachern, Lösemitteln und anderen Kunstharzen. Das kann dazu ausgenutzt werden, die Eigenschaften der neuen Produkte in die eine oder andere Richtung zu modifizieren, wie z.B. die Filmhärte, die Filmflexibilität und die Verfilmungsgeschwindigkeit.

Da mit Hilfe der neuen Dispersionen der Einsatz hydrophiler Hilfsstoffe vermeidbar wird, lassen sich mit ihnen auch Beschichtungen herstellen, die im Vergleich zu den herkömmlichen wesentlich besser witterungsbeständig sind.

So lassen sich Beschichtungen erhalten, die z.B. bei Nässe nicht mehr weiß anlaufen und eine wesentlich verbesserte Naßhaftung, Glanzhaltung und Kreidungsresistenz aufweisen. Ein besonderer technischer Vorteil besteht darin, daß die hohe Hydrophobie im Gegensatz zu den herkömmlichen Dispersionen schon sofort nach dem Verfilmen zum Tragen kommt. Die Beschichtungen können also wesentlich früher Witterungseinflüssen ausgesetzt werden als diejenigen herkömmlicher Dispersionen, ohne bleibende Filmschäden zu erleiden. Die erfindungsgemäß erhaltenen Produkte gewährleisten deshalb einen sehr viel besseren Schutz gegen Witterungseinflüsse und eignen sich daher hervorragend für den Korrosionsschutz von Metallen und den Schutz anderer Werkstoffe gegen äußere Einflüsse.

Die erfindungsgemäß hergestellten Dispersionen können mit vielen üblichen Dispersionen, aber auch mit Polymerisat- oder Polykondensatharzen wie Harnstoff/Formaldehyd-, Phenolformaldehyd- oder Melaminformaldehydharzen abgemischt werden.

Durch die Kombination mit den erfindungsgemäßen Dispersionen können auch in der Abmischung oft die sonst erforderlichen hydrophilen Hilfsstoffe, Netzmittel und Dispergiermittel, Verdickungsmittel und Konservierungsmittel erübrigt werden, und die Wasserfestigkeit der Beschichtungen auf Basis von üblichen Dispersionen wird erheblich verbessert.

Das Polymerisat der erfindungsgemäßen Dispersionen ist eine homogene Mischung und besteht zu 15 bis 50, vorzugsweise 22 bis 40, insbesondere 25 bis 35 Gew.% aus einer Komponente (A) und zu 50 bis 85, vorzugsweise 60 bis 78, insbesondere 65 bis 75 Gew.% aus einer Komponente (B), wobei die Summe der unter (A) und (B) genannten Prozentzahlen 100 beträgt.

Komponente (A) ist ein Copolymerisat aus
I 25 bis 98,5 Gew.% eines Acrylsäure- oder Methacrylsäure-C₁-C₂₀-alkylesters oder Gemisches dieser Ester
II 0 bis 60 Gew.% des Monomeren I oder eines Vinylaromaten
III 1,5 bis 15 Gew.% einer copolymerisierbaren olefinisch ungesättigten Carbonsäure oder einem ihrer Anhydride, die bis zu 10 C-Atomen enthalten und
IV bis zu 30 Gew.% sonstiger copolymerisierbarer Verbindungen
wobei die Summe der unter (I) bis (IV) genannten Prozentzahlen 100 ist.

Komponente (B) ist ein Copolymerisat aus ausschließlich den Comonomeren (I), (II), und (IV).

Zunächst wird eine der beiden Komponenten (A) oder (B) in einem organischen Lösemittel polymerisiert und in der so erhaltenen Polymerlösung wird dann die andere Komponente polymerisiert.

Zu den Aufbaukomponenten der Komponenten (A) und (B) ist folgendes auszuführen:
(I) Als Ester der Acrylsäure oder Methacrylsäure mit 1 bis 20 Kohlenstoffatome enthaltenden geradkettigen oder verzweigten Monoalkanolen (I) eignen sich z.B. Methylacrylat, Ethylacrylat, Isopropylacrylat, Methylmethacrylat, n-Butylacrylat, n-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat und Methylmethacrylat.
(II) Als Vinylaromaten, durch die die (Meth)-acrylsäureester teilweise ersetzt sein können, eignen sich z.B. Vinyltoluol und vorzugsweise Styrol, die bis zu 60, vorzugsweise 15 bis 50 Gew.% der (Meth)-acrylsäureester ersetzen können.
(III) Als Komponente (III) kommen copolymerisierbare olefinisch ungesättigte, bis 10 Kohlenstoffatome enthaltende Carbonsäuren oder Carbonsäureanhydride in Frage, z.b. Acrylsäure, Methacrylsäure, Maleinsäure, Itaconsäure bzw. die Anhydride oder Halbester dieser Dicarbonsäuren.
   Die Anhydridgruppen der Copolymerisate können vor dem Neutralisieren mit Ammoniak, beispielsweise durch Erwärmen mit 1 bis 8 Kohlenstoffatome enthaltenden Alkoholen oder Glykolethern in die entsprechenden Halbestergruppen übergeführt werden. Beispiele für solche Alkohole bzw. Glykolether sind Ethanol, Isopropanol, Butanol und Butylglykol.
   Bevorzugte Komponenten (III) sind Acrylsäure, Methacrylsäure und Itaconsäure. Komponente (III) ist im Copolymerisat (A) in Mengen von 1,5 bis 15, vorzugsweise 5 bis 13 Gew.% einpolymerisiert; besonders bevorzugt sind 5 bis 12 Gew.% Acrylsäure und/oder Methacrylsäure.
(IV) Bei der Komponente (IV) handelt es sich um weitere, unter I bis III nicht genannte copolymerisierbare olefinisch ungesättigte Verbindungen. Es sind dies beispielsweise Mono(meth)acrylate von Alkandiolen, wie Hydroxyethyl- und Hydroxypropyl(meth)acrylat sowie Butandiolmono(meth)acrylat, (Meth)acrylamid und/oder (Meth)acrylnitril. Diese Monomeren können, falls erforderlich, zur Einstellung spezieller Eigenschaften dienen.
   Als Komponente (IV) können noch vorhanden sein: Vinylether, Vinylester, Diester der Maleinsäure, Itaconsäure, Citraconsäure oder Mesaconsäure mit, gegebenenfalls Ether- oder Thioether-Gruppen enthaltenden, Monoalkoholen mit 1 bis 20 Kohlenstoffatomen. Weiterhin können als Komponente (IV) Monoolefine mit 3 bis 20 Kohlenstoffatomen, wie Propen, Buten, Penten, Hexen, Isobuten und Diolefine wie Butadien und Isopren verwendet werden.
   Es ist bekannt, daß polare funktionelle Gruppen, wie sie in Komponente (IV) enthalten sein können, z.B. Hydroxy- oder Ethergruppen, Polymerdispersionen zusätzlich stabilisieren. Die erfindungsgemäßen Dispersionen benötigen jedoch eine solche zusätzliche Stabilisierung nicht. In Komponente (IV) enthaltene polare Gruppen können jedoch die Wasserfestigkeit der aus den erfindungsgemäßen Dispersionen erhaltenen Filme ungünstig beeinflussen. In der bevorzugten Ausführungsform der Erfindung wird Komponente (IV) daher nicht mitverwendet.

Die Summe der unter (I) bis (IV) genannten Prozentzahlen ist 100.

Komponente (B) des Polymerisats enthält nicht die Aufbaukomponente (III).

Aus dem Aufbau der Komponenten (A) und (B) ergibt sich folgendes:
Komponente (A) ist, für sich allein betrachtet, ein nach teilweiser oder vollständiger Neutralisation mit Ammoniak wasserverdünnbares Polymerisat, das infolge der verhältnismäßig geringen Anzahl enthaltener Carboxylgruppen nicht im üblichen Sinne wasserlöslich ist, sondern in Wasser feinteilige Dispersionen ergibt.

Es ist für die Wasserfestigkeit der aus den erfindungsgemäßen Dispersionen erhaltenen Filme wichtig, daß auch die Komponente (A) allein bereits Filme mit guter Wasserquellfestigkeit ergibt.

Die Menge der für (A) verwendeten Aufbaukomponente (III) wird daher zweckmäßigerweise so gewählt, daß die Säurezahl nach DIN 53 402 von (A), bezogen auf Feststoff, bei Mitverwendung von bis zu 10 Gew.% Vinylaromaten maximal 75 mg KOH/g, vorzugsweise 54 bis 65 mg KOH/g, bei Mitverwendung von 10 bis 60 Gew.% Vinylaromaten maximal 95 mg KOH/g, vorzugsweise 62 bis 94 mg KOH/g beträgt. Bei höheren Säurezahlen ist eine wasserquellfeste Verfilmung von (A) nicht mehr in jedem Fall gewährleistet.

Komponente (B) ist, für sich allein betrachtet, nicht wasserverdünnbar und darüber hinaus auch frei von säuregruppenhaltigen Monomeren.

Die oben beschriebenen technischen Vorteile der erfindungsgemäßen Dispersionen kommen besonders dann zum Tragen, wenn das Verhältnis von (A) zu (B) so gewählt wird, daß die Säurezahl der Mischung von (A) und (B) bei Mitverwendung von bis zu 10 Gew.% Vinylaromaten maximal 30 mg KOH/g, vorzugsweise 12 bis 27 mg KOH/g, bei Mitverwendung von 10 bis 60 Gew.% Vinylaromaten maximal 50 mg KOH/g, vorzugsweise 20 bis 47 mg KOH/g beträgt.

Es ist überraschend, daß die erfindungsgemäßen Dispersionen bei so niedrigen Gesamtsäurezahlen ohne zusätzliche Stabilisierung stabil sind und auch nach monatelanger Lagerung nicht zur Zweiphasenbildung neigen.

Die Comonomeren-Zusammensetzung von (I) kann in (A) und (B) die gleiche sein, sie kann aber auch verschieden gewählt werden, um die Eigenschaften der Dispersion gezielt in die eine oder andere Richtung abzuwandeln, beispielsweise um die Mindestfilmbildetemperatur, die Filmflexibilität oder Filmhärte zu verändern.

Die erfindungsgemäßen Dispersionen sind besonders breit verwendbar, wenn die Polymerisathärte so gewählt wird, daß die Dispersionen ohne weitere Zusätze bei Raumtemperatur zu klaren und klebfreien Filmen auftrocknen. Dem Fachmann sind die dafür erforderlichen Maßnahmen - es handelt sich gewöhnlich um eine geeignete Kombination von hart- und weichmachenden Monomeren - bekannt.

Die Glastemperaturen von Komponente (A) und (B) sollen sich nicht zu stark, vorzugsweise um nicht mehr als 30°C, unterscheiden, da (A) und (B) sonst unter Umständen keine homogene Mischung ergeben.

Das Verfahren der Lösungspolymerisation ist dem Fachmann bekannt, so daß auf die für die jeweiligen Aufbaukomponenten geeigneten Bedingungen hier nicht näher eingegangen zu werden braucht.

Die Polymerisation erfolgt zweckmäßigerweise in Gegenwart von 0,3 bis 5,0, vorzugsweise 0,5 bis 3,0 Gew.%, bezogen auf die Summe der Monomeren (I) bis (IV), radialbildender Initiatoren, wie Azobiscarbonsäureamiden, Azobiscarbonsäurenitrilen oder Peroxiden, im allgemeinen bei Temperaturen zwischen 50 und 150°C, vorzugsweise zwischen 80 und 130°C, gegebenenfalls in Gegenwart von Reglern wie Mercaptoethanol, Tertiärdodecylmercaptan oder Diisopropylxanthogendisulfid, die in Mengen von 0 bis 3 Gew.%, bezogen auf die Summe der Monomeren (I) bis (IV) vorhanden sein können.

Als organische Lösemittel kommen grundsätzlich alle in der Lacktechnologie gebräuchlichen Lösemittel, die das erfindungsgemäße Polymerisat lösen, in Betracht. Ein Gehalt an Lösemittel ist für die Stabilisierung und die positiven Anwendungseigenschaften der erfindungsgemäßen Dispersionen nicht erforderlich, und es ist daher aus Gründen des Umweltschutzes sinnvoll, den Gehalt an Lösemittel möglichst klein zu wählen.

Zweckmäßigerweise werden Lösemittel verwendet, die sich aufgrund ihres Siedepunktes und/oder Azeotropbildung mit Wasser leicht aus den erfindungsgemäßen Dispersionen abdestillieren lassen. Besonders bevorzugt sind Butanol, Isobutanol, Propanol, Ethanol und Toluol.

Es ist an sich nicht von Bedeutung, ob zuerst die Komponente (A) und dann die Komponente (B) polymerisiert wird oder ob umgekehrt vorgegangen wird. In einer bevorzugten Ausführungsform der Erfindung wird jedoch zunächst die Komponente (A) und anschließend die Komponente (B) polymerisiert. Die beiden Komponenten ergeben bei erfindungsgemäßer Herstellung eine homogene Mischung. Die zuerst hergestellte Komponente wird weitestgehend, d.h. zu mehr als 95 %, vorzugsweise zu mehr als 99 %, auspolymerisiert, bevor mit der Polymerisation der zweiten Komponente begonnen wird.

Durch Restmonomere aus der ersten Komponente, insbesondere säuregruppengaltige, würde sich die Zusammensetzung der zweiten Komponente verändern, was zu einer Verschlechterung der anwendungstechnischen Eigenschaften, insbesondere zu einer Verstärkung der Viskositätsabhängigkeit vom pH-Wert führen würde.

Dispersionen, die analog zu den erfindungsgemäßen aus zwei getrennt hergestellten und dann gemischten Polymerisaten (A) und (B) hergestellt werden, weisen ebenfalls ungünstige anwendungstechnische Eigenschaften, wie z.B. geringere Stabilität und ungünstigeres Fließverhalten auf. Zudem würde das Mischen einen zusätzlichen Arbeitsgang erfordern.

Die auspolymerisierten Copolymerisatlösungen (= resultierendes Gemisch der Komponenten (A) + (B)) werden entweder durch Zumischen von Ammoniak und Verdünnen mit Wasser in Dispersionen überführt, oder man rührt das auspolymerisierte Copolymerisat bzw. die auspolymerisierte Copolymerisatlösung langsam in eine wäßrige Ammoniaklösung ein und erhält dadurch eine Dispersion.

Die so erhaltenen Dispersionen können entsprechend dem Lösemittelgehalt des aus (A) und (B) zusammengesetzten Polymerisats u.U. noch mehr als die erfindungsgemäß statthaften Mengen organische Lösemittel enthalten. Ein solcher Überschuß wird gegebenenfalls destillativ, vorzugsweise durch Vakuumdestillation, aus den Dispersionen entfernt, wobei das Lösemittel zurückgewonnen werden kann.

Der Neutralisationsgrad der erfindungsgemäßen Dispersionen beträgt 10 bis 150 %, vorzugsweise 15 bis 100 %, besonders bevorzugt 40 bis 70 %. Der pH-Wert der Dispersionen kann demnach zwischen etwa 6,8 und 10, vorzugsweise zwischen 7,0 und 9,0 betragen.

Von dem als Neutralisationsmittel dienenden Ammoniak kann - zur Erzielung bestimmter Effekte - ein geringer Teil, zweckmäßig nicht mehr als 25 Gew.%, vorzugsweise nicht mehr als 10 Gew.% des für die Neutralisation erforderlichen Ammoniaks, durch organische Amine, insbesondere Triethylamin, ersetzt werden. Solche Zusätze können die Wasserquellbarkeit und die Wasserdurchlässigkeit der Anstriche erhöhen.

Der Polymerisatgehalt der erfindungsgemäßen Dispersionen wird zweckmäßigerweise so gewählt, daß sich eine für den Verarbeiter günstige Viskosität ergibt. Der Polymerisatgehalt beträgt deshalb 40 bis 60 Gew.%, vorzugsweise 45 bis 55 Gew.%.

Die erfindungsgemäß hergestellten Dispersionen können als alleinige Bindemittel zur Herstellung der Beschichtungs- und Imprägnierstoffe dienen. Zur Einarbeitung von Pigmenten und Füllstoffen sind keine Dispergierhilfsstoffe erforderlich, wie sie beispielsweise zur Herstellung von üblichen Dispersionsanstrichstoffen benötigt werden. Die erfindungsgemäßen Dispersionen lassen sich durch einfaches Unterrühren der Pigmente und Füllstoffe pigmentieren.

Für die Herstellung von Beschichtungsstoffen können neben Pigmenten und Füllstoffen, wie Titandioxid, Eisenoxide, Chromoxide, Bariumsulfat, Ruß, Calcite, Dolomit, Talkum, Aluminiumbronze und organische Pigmente, auch andere in der Lacktechnologie übliche Hilfsstoffe, wie beispielsweise Entschäumer, Netzmittel, Antiabsetz- bzw. Thixotropiermittel, Verdicker, Gleitmittel und Weichmacher mitverwendet werden. Selbst mit Wasser nicht mischbare Weichmacher, wie z.B. Chlorparaffine, können als Plastifizierungsmittel für die erfindungsgemäßen Dispersionen verwendet werden.

Polare Hilfsstoffe sind nicht erforderlich und können überdies die Wasserfestigkeit der aus den erfindungsgemäßen Dispersionen hergestellten Beschichtungen beeinträchtigen.

Die aus den erfindungsgemäßen Sekundärdispersionen hergestellten Überzugs- und Imprägnierstoffe sind nach üblichen Methoden verarbeitbar, wie z.B. durch Streichen, Spritzen, Rollen, Gießen, Tauchen und Walzen. Beispiele für die Anwendung der erfindungsgemäßen Produkte sind Klarlacke und pigmentierte Anstrichstoffe zum Schutz verschiedenartiger Substrate, z.B. von Stahl oder anderen Metallen, von mineralischen Werkstoffen wie Mauerwerk, Beton, Asbestzement, von faserhaltigen oder organischen Werkstoffen wie Holz, Pappe, Textilien, Teerpappe, bestehenden Anstrichen auf anderer Basis und Kunststoffen gegen atmosphärische und andere Einflüsse. Andere Einsatzgebiete sind beispielsweise Verfestigung, Hydrophobierung oder Verklebung saugender mineralischer oder faserhaltiger Substrate und Straßenmarkierungsfarben.

### Beispiel 1

In einer üblichen Rührapparatur ließ man zu einer Vorlage von 120 g Ethanol innerhalb von 2,5 Stunden bei 80°C eine Mischung aus 228 g Styrol, 300 g Butylacrylat, 72 g Acrylsäure, 18 g tert.-Butylperoctoat und 90 g Ethanol gleichmäßig zulaufen und polymerisierte weitere 2 Stunden bei 80°C.

Dann ließ man ebenfalls bei 80°C in 2 Stunden eine Mischung aus 288 g Styrol, 312 g Butylacrylat, 18 g tert.-Butylperoctoat und 90 g Ethanol zulaufen und polymerisierte weitere 4 Stunden. Man versetzte mit 63,3 g 25 gew.%iger wäßriger Ammoniaklösung und 1100 g Wasser und destillierte im Vakuum ein Ethanol/Wasser-Gemisch ab. Während der Destillation ließ man die für den gewünschten Endfeststoffgehalt notwendige Menge an frischem Wasser zulaufen.

Man erhielt eine lagerstabile Dispersion, die durch folgende Daten charakterisiert war:

| | |
|---|---|
| Gehalt an nichtflüchtigen Anteilen | 46,7 % |
| Säurezahl (100 gew.%ig) | 43,5 mg KOH/g |
| Aminzahl (100 gew.%ig) | 27,2 mg KOH/g |
| pH-Wert | = 8,1 |
| Ethanolgehalt | 0,8 Gew.%. |

### Beispiel 2

Es wurden zunächst zwei Mischungen vorbereitet:
Mischung I bestand aus 228 g Methylmethacrylat, 102 g Butylacrylat und 30 g Acrylsäure; Mischung II besteht aus 1,7 g tert.-Butylperbenzoat, 1,7 g tert.-Butylperoctoat und 34 g Isobutanol.

In einer üblichen Rührapparatur wurden 208 g Isobutanol und jeweils die Hälfte von Mischung I und II vorgelegt und auf Rückflußtemperatur erhitzt. Dann wurden die Reste von Mischung I und II parallel in 20 Minuten zugetropft, anschließend eine Mischung aus 3 g tert.-Butylperbenzoat und 30 g Isobutanol in 30 Minuten. Nun wurde 2 Stunden bei Rückflußtemperatur nachpolymerisiert (*).

Anschließend wurden im Verlauf von 2 Stunden bei Rückflußtemperatur parallel eine Mischung aus 492 g Methylmethacrylat und 348 g Butylacrylat sowie eine Mischung aus 5,5 g tert.-Butylperoctoat, 5,5 g tert.-Butylperbenzoat und 110 g Isobutanol zugetropft, daran anschließend innerhalb von 30 Minuten eine Mischung aus 4,8 g tert.-Butylperoctoat und 48 g Isobutanol.

Es wurde 2 Stunden nachpolymerisiert und auf 65°C abgekühlt. Man versetzte mit 24,7 g 25 gew.%iger wäßriger Ammoniaklösung und anschließend mit 1040 g Wasser.

Dann wurde im Vakuum ein Isobutanol/Wasser-Gemisch abdestilliert, bis kein Isobutanol mehr überging. Zum Schluß wurde mit Wasser auf einen Feststoffgehalt von 45 Gew.% eingestellt.

Die erhaltene Dispersion enthielt noch 0,7 Gew.% Isobutanol und besaß einen pH-Wert von 7,7 eine Säurezahl (nach DIN 53 402) von 19,3 mg KOH/g eine Aminzahl (nach DIN 53 176) von 11,6 mg KOH/g und einen K-Wert (nach Fikentscher) von 36.

### Vergleichsbeispiel

Man verfuhr zunächst wie in Beispiel 2 bis zu der mit (*) markierten Stelle beschrieben.

In einer anderen Apparatur tropfte man zu einer Vorlage von 200 g Isobutanol im Verlauf von 2 Stunden bei Rückflußtemperatur parallel eine Mischung aus 492 g Methylmethacrylat und 348 g Butylacrylat sowie eine Mischung aus 5,5 g tert.-Butylperoctoat, 5,5 g tert.-Butylperbenzoat und 110 g Isobutanol, daran anschließend innerhalb von 30 Minuten eine Mischung aus 4,8 g tert.-Butylperoctoat und 48 g Isobutanol zu. Man polymerisiert weitere 2 Stunden und vereinigt die so erhaltene Polymerlösung dann mit der zuerst hergestellten Polymerlösung.

Bei 65°C wurde sodann mit 24,7 g 25 gew.%iger wäßriger Ammoniaklösung und 840 g Wasser versetzt. Dann wurde weiter verfahren wie in Beispiel 2 beschrieben.

Die erhaltene Dispersion ergab bei Raumtemperaturtrocknung trübe und stippige Filme und bildet beim Stehen bereits nach wenigen Tagen zwei Phasen.

### Beispiel 3

Vorgelegt wurde eine Mischung aus 277 g Isobutanol, 192 g Methylmethacrylat, 252 g Butylacrylat, 56 g Methacrylsäure, 2,2 g tert.-Butylperoctoat und 2,2 g tert.-Butylperbenzoat.

Man erhitzte zum Sieden und polymerisierte 3 Stunden. Der aus dem Feststoffgehalt bestimmte Polymerisationsumsatz betrug 99,7 %.

Man ließ dann im Verlauf von 3 Stunden eine Mischung aus 640 g Methylmethacrylat, 460 g Butylacrylat, 7,4 g tert.-Butylperoctoat, 7,4 g tert.-Butylperbenzoat und 192 g Isobutanol zulaufen und polymerisierte weitere 3 Stunden.

Es wurde auf 70°C abgekühlt, mit 33 g 25 gew.%iger wäßriger Ammoniaklösung und dann mit 1300 g Wasser versetzt.

Dann wurde im Vakuum ein Isobutanol/Wasser-Gemisch abdestilliert, bis kein Isobutanol mehr überging. Zum Schluß wurde mit Wasser auf einen Feststoffgehalt von 48 Gew.% eingestellt. Es entstand eine lagerstabile Dispersion, die durch folgende Daten charakterisiert war:

| | |
|---|---|
| Säurezahl (100 gew.%ig) | 22,9 mg KOH/g |
| Aminzahl (100 %gew.ig) | 11,5 mg KOH/g |
| pH-Wert | 7,5 |
| Viskosität | 750 mPas |
| Isobutanolgehalt | 1,9 Gew.% |

### Beispiel 4

Es wurden zwei Mischungen vorbereitet:
Mischung I bestand aus 228 g Methylmethacrylat, 105 g Butylacrylat und 27 g Itaconsäure. Mischung II bestand aus 1,7 g tert.-Butylperoctoat, 1,7 g tert.-Butylperbenzoat und 34 g Isobutanol. Vorgelegt wurden 208 g Isobutanol und jeweils die Hälfte von Mischung I und II.

Man erhitzte auf Rückflußtemperatur und tropfte die Reste von Mischung I und II innerhalb von 20 Minuten gleichmäßig zu. Es wurde 2 Stunden bei Rückflußtemperatur nachpolymerisiert.

Man ließ dann bei Rückflußtemperatur in 2 Stunden eine Mischung aus 480 g Methylmethacrylat und 360 g Butylacrylat sowie eine Mischung aus 5,5 g tert.-Butylperoctoat und 5,5 g tert.-Butylperbenzoat und 110 g Isobutanol zulaufen, dann anschließend innerhalb von 30 Minuten eine Mischung aus 4,8 g tert.-Butylperbenzoat und 48 g Isobutanol.

Man verfuhr weiter wie in Beispiel 2 beschrieben, verwendete jedoch 31,1 g 25 gew.%iger wäßriger Ammoniaklösung und stellte auf einen Feststoffgehalt von 49 Gew.% ein. Die Dispersion besaß einen pH-Wert von 8,2,
eine Säurezahl (100 gew.%ig) von 16,2 mg KOH/g,
eine Aminzahl (100 gew.%ig) von 8,8 mg KOH/g und
eine Viskosität von 600 mPas, gemessen mit einem Rotationsviskosimeter.

### Prüfung der lacktechnischen Eigenschaften

Die Dispersionen der Beispiele 1 bis 4 wurden jeweils mit Naßschichtdicken von 0,15 mm auf Glasplatten, PVC-Folie, Tiefziehblech und feuerverzinktes Blech aufgetragen. Die anfangs trüben Filme trockneten an der Luft in wenigen Minuten zu klaren, klebfreien Lackfilmen auf. Im Gegensatz zu Lackfilmen bekannter marktgängiger Primärdispersionen mit ähnlicher Polymerisatzusammensetzung waren diese Filme gleich nach dem Auftrocknen stark wasserabweisend und auch bei längerer Wassereinwirkung noch gut beständig gegen Quellung und Weißanlaufen sowie gut haftfest. Nach 7-tägiger Wasserlagerung der 16 Stunden bei 50°C nachgetrockneten Filme betrug die Wasseraufnahme weniger als 3 Gew.%. Die Filme blieben dabei klar und haftfest. Das Tiefziehblech erlitt unter dem Lackfilm keine Korrosion.

Jeweils 45 g der Dispersionen der Beispiele 1 und 2 wurden mit 20 g Wasser sowie konzentriertem Ammoniak auf einen pH-Wert von ca. 9,5 eingestellt. In diese Dispersionen wurden 50 g Rutil und 10 g Schwerspat unter starker Scherbeanspruchung ca. 15 Minuten eindispergiert. Die Pigmentsuspensionen wurden mit weiteren 170 g der gleichen Dispersionen der Beispiele 1 bzw. 2 sowie 10 g Benzolsulfonsäure-n-butylamid als Weichmacher vermischt und mit Wasser auf eine Viskosität von etwa 1 Pas nachverdünnt. Man erhielt lagerstabile Glanzfarben, deren Lackfilme gleichartige Eigenschaften aufwiesen wie die entsprechenden unpigmentierten Dispersionen. Insbesondere die Glanzbeschichtung aus der Dispersion des Beispiels 2 zeichnete sich durch hervorragende Glanzhaltung und Kreidungsresistenz bei Kurz- und Freibewitterung aus.

Die Dispersion des Beispiels 1 wurde mit konzentriertem Ammoniak auf einen pH-Wert von ca. 9,5 eingestellt. Es entstand eine pastöse Masse, die mit Steinsplitt vermischt dickschichtig auf mineralische Werkstoffe aufgetragen wurde, ohne beim Auftrocknen an senkrechten Flächen abzulaufen.

## Patentansprüche

1. Wäßrige Polymerisatdispersionen, deren Polymerisatanteil im wesentlichen aus den Komponenten
A) 15 bis 50 Gew.% eines Copolymerisates A aus
I 25 bis 98,5 Gew.% eines Acrylsäure- oder Methacrylsäure-C₁-C₂₀-alkylesters oder Gemisches dieser Ester
II 0 bis 60 Gew.% des Monomeren I oder eines Vinylaromaten
III 1,5 bis 15 Gew.% einer copolymerisierbaren olefinisch ungesättigten Carbonsäure oder einem ihrer Anhydride, die bis zu 10 C-Atomen enthalten und
IV bis zu 30 Gew.% sonstiger copolymerisierbarer Verbindungen
und
B) 50 bis 85 Gew.% eines Lösungspolymerisates B aus ausschließlich den Comonomeren I, II und IV besteht,
erhältlich durch Lösungspolymerisation einer dieser Komponenten (A) oder (B) in einem organischen Lösungsmittel und anschließender Lösungspolymerisation der anderen Komponente in der so erhaltenen Polymerisationslösung, Dispergierung der (A) und (B) enthaltenden Lösung unter Zusatz von Ammoniak in Wasser und destillative Entfernung des organischen Lösungsmittels auf eine Konzentration von weniger als 5 Gew.%, bezogen auf die Menge der Dispersion.

2. Wäßrige Polymerisatdispersionen nach Anspruch 1, bei denen im Fall der Mitverwendung von weniger als 10 Gew.% Vinylaromaten die Säurezahl der Komponente (A) maximal 75 mg KOH/g Feststoff und die Säurezahl der Mischung der Komponenten (A) und (B) maximal 30 mg KOH/g Feststoff beträgt und bei Mitverwendung von 10 bis 60 Gew.% Vinylaromaten die Säurezahl der Komponente (A) maximal 95 mg KOH/g Feststoff und die Säurezahl der Mischung der Komponenten (A) und (B) maximal 50 mg KOH/g Feststoff beträgt.

3. Verfahren zur Herstellung wäßriger Polymerdispersionen, dadurch gekennzeichnet, daß man deren Polymerisatanteil, bestehend aus den Komponenten
A) 15 bis 50 Gew.% eines Copolymerisates A aus
I 25 bis 98,5 Gew.% eines Acrylsäure- oder Methacrylsäure-C₁-C₂₀-alkylesters oder Gemisches dieser Ester
II 0 bis 60 Gew.% des Monomeren I oder eines Vinylaromaten
III 1,5 bis 15 Gew.% einer copolymerisierbaren olefinisch ungesättigten Carbonsäure oder einem ihrer Anhydride, die bis zu 10 C-Atomen enthalten und
IV bis zu 30 Gew.% sonstiger copolymerisierbarer Verbindungen
und
B) 50 bis 85 Gew.% eines Lösungspolymerisates B aus ausschließlich den Comonomeren I, II und IV,
durch Lösungspolymerisation einer dieser Komponenten (A) oder (B) in einem organischen Lösungsmittel und anschließender Lösungspolymerisation der anderen Komponente in der so erhaltenen Polymerisationslösung herstellt, die (A) und (B) enthaltenden Lösung unter Zusatz von Ammoniak in Wasser dispergiert und destillative Entfernung des organischen Lösungsmittels auf eine Konzentration von weniger als 5 Gew.%, bezogen auf die Menge der Dispersion, destillativ entfernt.

4. Verwendung von Polymerdispersionen nach den Ansprüchen 1 bis 3, als Bindemittel für Beschichtungen auf starren oder flexiblen Untergründen.

5. Verwendung von Polymerdispersionen nach den Ansprüchen 1 bis 3 als Klebstoff.

## Claims

1. An aqueous polymer emulsion whose polymer component essentially consists of
A) from 15 to 50% by weight of a copolymer A of
I from 25 to 98.5% by weight of a C₁-C₂₀-alkyl acrylate or methacrylate or a mixture of these esters,
II from 0 to 60% by weight of a monomer I or a vinylaromatic,
III from 1.5 to 15% by weight of a copolymerizable olefinically unsaturated carboxylic acid or one of its anhydrides which contain not more than 10 carbon atoms and
IV not more than 30% by weight of other copolymerizable compounds and
B) from 50 to 85% by weight of a solution polymer B consisting exclusively of the comonomers I, II and IV,
obtainable by solution polymerization of one of these components (A) or (B) in an organic solvent, followed by solution polymerization of the other component in the resulting polymerization solution, dispersing the solution containing (A) and (B) in water with the addition of ammonia, and removal of the organic solvent, by distillation, to a concentration of less than 5% by weight, based on the amount of emulsion.

2. An aqueous polymer emulsion as claimed in claim 1, wherein, where less than 10% by weight of a vinylaromatic is used, the acid number of component (A) is not more than 75 mg of KOH/g of solid and the acid number of the mixture of components (A) and (B) is not more than 30 mg of KOH/g of solid, and, where from 10 to 60% by weight of a vinylaromatic is used, the acid number of component (A) is not more than 95 mg of KOH/g of solid and the acid number of the mixture of components (A) and (B) is not more than 50 mg of KOH/g of solid.

3. A process for the preparation of an aqueous polymer emulsion, wherein the polymer component of said emulsion, consisting of
A) from 15 to 50% by weight of a copolymer A of
I from 25 to 98.5% by weight of a C₁-C₂₀-alkyl acrylate or methacrylate or a mixture of these esters,
II from 0 to 60% by weight of a monomer I or a vinylaromatic,
III from 1.5 to 15% by weight of a copolymerizable olefinically unsaturated carboxylic acid or one of its anhydrides which contain not more than 10 carbon atoms and
IV not more than 30% by weight of other copolymerizable compounds and
B) from 50 to 85% by weight of a solution polymer (B) consisting exclusively of the comonomers I, II and IV,
is prepared by solution polymerization of one of these components (A) or (B) in an organic solvent, followed by solution polymerization of the other component in the resulting polymerization solution, the solution containing (A) and (B) is dispersed in water, with the addition of ammonia, and the organic solvent is removed, by distillation, to a concentration of less than 5% by weight, based on the amount of dispersion.

4. Use of a polymer emulsion as claimed in claims 1 to 3 as a binder for coatings on rigid or flexible substrates.

5. Use of a polymer emulsion as claimed in claims 1 to 3 as an adhesive.

## Revendications

1. Dispersions aqueuses de polymères, dont le constituant polymère est formé essentiellement par les composants suivants:
A) de 15 à 50% en poids d'un copolymère A de
I 25 à 98,5% en poids d'un acrylate ou méthacrylate d'alkyle en C₁-C₂₀ ou d'un mélange de ces esters,
II 0 à 60% en poids du monomère I ou d'un composé vinylaromatique,
III 1,5 à 15% en poids d'un acide carboxylique à insaturation oléfinique copolymérisable ou d'un anhydride de celui-ci, contenant jusqu'à 10 atomes de carbone, et
IV jusqu'à 30% en poids d'autres composés copolymérisables,
et
B) de 50 à 85% en poids d'un produit de polymérisation en solution B, formé exclusivement des comonomères I, II et IV,
pouvant être obtenues par polymérisation en solution de l'un de ces composants (A) ou (B) dans un solvant organique, suivie de polymérisation en solution de l'autre composant dans la solution de polymérisation ainsi obtenue, dispersion de la solution contenant (A) et (B) dans de l'eau avec addition d'ammoniac, et élimination du solvant organique par distillation, jusqu'à une concentration de moins de 5% en poids par rapport à la quantité de la dispersion.

2. Dispersions aqueuses de polymères selon la revendication 1, dans lesquelles, en cas d'utilisation simultanée de moins de 10% en poids de composé vinylaromatique, l'indice d'acide du composant (A) s'élève au maximum à 75 mg de KOH/g de matière solide et l'indice d'acide du mélange des composants (A) et (B) s'élève au maximum à 30 mg de KOH/g de matière solide, et en cas d'utilisation simultanée de 10 à 60% en poids de composé vinylaromatique, l'indice d'acide du composant (A) s'élève au maximum à 95 mg de KOH/g de matière solide et l'indice d'acide du mélange des composants (A) et (B) s'élève au maximum à 50 mg de KOH/g de matière solide.

3. Procédé de préparation de dispersions aqueuses de polymères, caractérisé en ce qu'on prépare le constituant polymère de celles-ci, formé par les composants suivants:
A) de 15 à 90% en poids d'un copolymère A de
I 25 à 98,5% en poids d'un acrylate ou méthacrylate d'alkyle en C₁-C₂₀ ou d'un mélange de ces esters,
II 0 à 60% en poids du monomère I ou d'un composé vinylaromatique,
III 1,5 à 15% en poids d'un acide carboxylique à insaturation oléfinique copolymérisable ou d'un anhydride de celui-ci, contenant jusqu'à 10 atomes de carbone, et
IV jusqu'à 30% en poids d'autres composés copolymérisables,
et
B) de 50 à 85% en poids d'un produit de polymérisation en solution B, formé exclusivement des comonomères I, II et IV,
par polymérisation en solution de l'un de ces composants (A) ou (B) dans un solvant organique, suivie de polymérisation en solution de l'autre composent dans la solution de polymérisation ainsi obtenue, on disperse la solution contenant (A) et (B) dans de l'eau avec addition d'ammoniac, et on élimine le solvant organique par distillation, jusqu'à une concentration de moins de 5% en poids par rapport à la quantité de la dispersion.

4. Utilisation de dispersions de polymères selon l'une quelconque des revendications 1 à 3 comme liant pour des enduits sur des substrats rigides ou flexibles.

5. Utilisation de dispersions de polymères selon l'une quelconque des revendication 1 à 3 comme colle.
